# NEW EUROPEAN PATENT SPECIFICATION

(11) **EP 0 405 856 B2**
(45) Date of publication and mention of the opposition decision: **03.02.1999**
(45) Mention of the grant of the patent: 20.09.1995
(21) Application number: 90306851.8
(22) Date of filing: 22.06.1990
(51) Int. Cl.: G02B 15/173

(54) **Zoom lens**
Zoomobjektiv
Objectif à focale variable

(30) Priority: 26.06.1989 JP 163058/89; 29.06.1989 JP 169295/89
(43) Date of publication of application: 02.01.1991
(73) Proprietor: MATSUSHITA ELECTRIC INDUSTRIAL CO., LTD., Kadoma-shi, Osaka-fu 571 (JP)
(72) Inventor: Ono, Shusuke, Takatsuki-shi, Osaka-fu 569 (JP); Ishiguro, Keizo, Katano-shi, Osaka-fu 567 (JP); Nakajima, Yasuo, Ibaraki-shi, Osaka-fu, 567 (JP); Ii, Hisayuki, Katano-shi, Osaka-fu, 567 (JP); Hiramoto, Rieko, Moriguchi-shi, Osaka-fu 570 (JP)
(74) Representative: Dawson, Elizabeth Ann

(56) References cited:
- JP-A-62 178 917
- JP-A-64 068 709
- US-A- 4 818 083
- PATENT ABSTRACTS OF JAPAN, vol. 12, no. 238 (P-726)[3085], 7th July 1988; & JP-A-63 029 719 (OLYMPUS) 08-02-1988
- PATENT ABSTRACTS OF JAPAN, vol. 14, no. 223 (P-1046)[4166], 11th May 1990; & JP-A-2 053 017 (MATSUSHITA) 22-02-1990

## Description

### BACKGROUND OF THE INVENTION

### 1. Field of the Invention

This invention relates to a zoom lens for use in a video camera, an electronic still camera or the like, which is compact in size and superior in performance.

### 2. Description of the Prior Art

Recently, video cameras have required to effect a good operability and maneuverability as well as to produce a higher picture image quality. Under such a trend, small-sized as 1/2 or 1/3-inch and high resolution image devices are becoming playing a leading role in responding to these requirements. And, accompanied with which, it has been strongly emphasized to use zoom lenses which are large in aperture ratio, small in size and light in weight as well as high in performance. In addition, cost reduction has also been largely required. As a result, practical realization of zoom lenses which make possible the reduction in the number of lens components while performances are being maintained at a high level is of urgent necessity.

Conventional video camera zoom lenses with the F-number of about 1.4 and zoom ratio of about six were so-called four-group lens system using more than 13 lens elements.

A conventional four-group zoom lens is disclosed in, for example, U.S. Pat. No. 4,749, 267, in which, looking from the object side, the first group having a positive refractive power moves on the optical axis to effect focusing. The second group having a negative refractive power moves on the optical axis to effect zooming. The third group having a negative refractive power moves on the optical axis while holding a constant relation with the second group thereby to keep the image surface position to be changed with the move of the second group in a constant positional relation with the reference surface. The fourth group having a positive refractive power moves the image surface to be formed through the first, second and third groups to the desired position and yet carries out necessary aberration corrections to effect the realization of height picture image quality. On the focusing, the first group is drawn out in the forward direction, so that such problems have been pointed out that lenses to be used for forming this group become large in diameter and large in weight, which means that the compactization is difficult to be realized. Also, on the focusing, the angle of view is varied, so that an image can be fluctuated in the focusing process, which has been pointed out as a problem that can decrease the dignity of focusing.

In order to solve the above-mentioned problems, a method in which other groups than the first group of a zoom lens are moved in the focusing process, so-called inner focusing method, has been conventionally employed.

For example, a method of focusing by moving the third group is disdosed in U.S. Pat. No. 4,364,642 and another method of focusing by moving the second and third groups is disdosed in U.S. Pat. No. 4,460,251. With the above-mentioned methods, however, the moving amount of the lens group or groups becomes large in the focusing process, thus arising such a problem that the entire length of lens system cannot be reduced.

In U.S. PaL No. 4,859,042 is disdosed a method to provide the fourth group with a focusing function in order to solve these problems. In this case, however, the number of lenses of the third group becomes large (see Embodiments 1, 2, 3, 8 and 9). The third group is made of a lens group consisting of convex, concave and convex lenses arranged in this order from the object side, so that diameters of these lenses become large (see Embodiments 4, 5 and 6). In addition, as the third group has a convex spherical lens and concave spherical lens arranged in this order from the object side, the F-number becomes large to make it dark (see Embodiment 7) and zoom ratio is small (Embodiments 10, 11, and 12).

Another zoom lens arrangement is disclosed in US-A-4818083. This arrangement again includes four lens groups, the first having a positive focal length, the second having a negative focal length, the third having a positive focal length and the fourth having a positive focal length in the order from the object side. The first and third groups are kept fixed, the second lens group is movable to vary the focal length of the lens system as a whole and the fourth group is movable to compensate for the shift in focal point which occurs when the second group is moved. This system is subject to some of the disadvantages noted above including the need for a relatively large number of lenses.

A similar system to that disclosed in US-A-4818083 is shown in JP-A-63-029719. Here the number of lens elements is relatively few, all embodiments having 11 or 12 individual lenses. It would still be advantageous to reduce the number of lenses even further to achieve a compact size.

JP-A-64-68709 discloses a zoom lens for use in video camera or an electronic still camera having in successive order from the object side. a first lens group (I) of positive refractive power consisting of a negative lens (L11), a positive lens (L12) and a positive meniscus lens (L13); a second lens group (II) of negative refractive power for affecting a variation of image magnification by moving along its optical axis. and consisting of a negative meniscus lens (L21), a negative lens (L22) and a positive lens (L23); a third lens group (III) of positive refractive power and consisting of a positive lens (L31) having at least one aspherical surface (r11, r12): and a fourth lens group (IV) of positive refractive power moving along its optical axis so as to focus and to correct for defocusing when a variation in image magnification is affected by a movement of said second group.

JP-A-62-178917 discloses a similar lens having four lens groups in which one of the lens surfaces in the fourth group is aspherical. The radio fᵢ/f_{w}, where fᵢ is the focal length of the first group and f_{w} is the entire focal length at the wide angle end is between 5.3 and 6.8. In such lenses it is necessary for the maximum distance between the third and fourth groups to be greater than the moving amount of the fourth group.

JP-A-62-178917 forms the basis of the preamble of claim 1.

An object of this invention is to provide a zoom lens for use in video cameras, which is small in the number of lens elements to be used, large in aperture ratio, small in size and weight as well as high in performance.

The lens of the present invention is defined in claim 1.

Each lens group is of lens type and has a surface shape preferable from the viewpoint of aberration performance.

With the above-mentioned configuration, problems conventionally remained to be overcome can be solved, so that a high performance, small size and light weight zoom lens for use in video cameras can be practically realised, which has a small number of lens components and exhibits a F-number of about 1.4 and zoom ratio of about six.

Embodiments of the invention will now be described by way of example only and with reference to the accompanying drawings in which:
Figure 1 is a schematic sectional view of a lens arrangement from which the present invention has developed, shown for the purpose of explanation;
Figures 2 and 3 are aberration characteristic diagrams for two specific examples of the lens arrangement shown in Figure 1;
Figure 4 is a schematic sectional view of a lens arrangement according to the present invention; and
Figures 5 to 8 are aberration characteristic diagrams of four embodiments of the present invention.

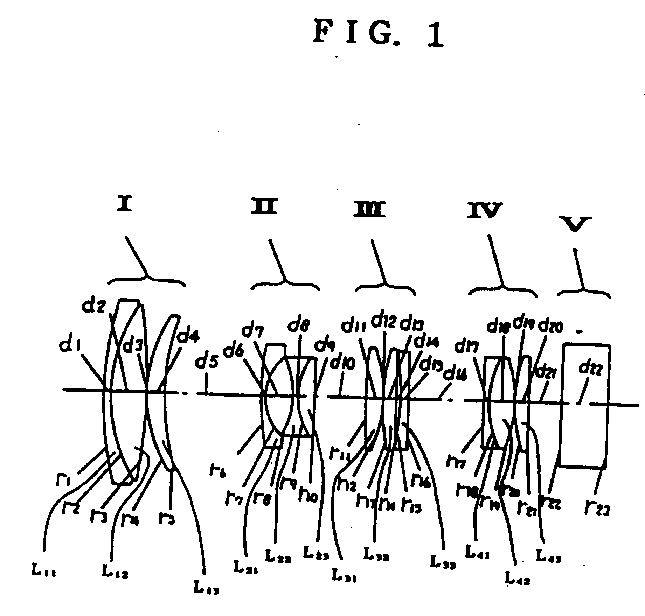

In Fig. 1, the reference Roman numerals I, II, III, IV and V indicate a first group having a positive refractive power, a second group having a negative refractive power, a third group having a positive refractive power, a fourth group having a positive refractive power and an optically equivalent glass plate corresponding to a quartz-crystal filter and the face plate of an image device or the like, respectively.

The first group I and third group III are unmovable in effecting both the zooming and the focusing. Variable power in the zooming process can be realized mainly by the move of the second group II, and the change in image-forming position induced in this case is corrected by moving the fourth group IV in response to the position of the second group II. The focusing is carried out by moving the fourth group IV. As a result, both the focusing and zooming can be effected by moving only two groups out of the above-mentioned four groups forming the zoom lens system, so that the optical system can be made simple in structure and economical to manufacture. In addition, since the first group I is not drawn out in the forward direction in the focusing process, diameters of respective lenses forming the first group I can be reduced, leading to the compactization.

Further in addition, by selecting the refractive power of the first group to a positive, that of the second group to a negative and that of the third group to a positive, the change in the angle of view due to the move of the fourth group in the focusing process can be decreased up to a level that is practically negligible, which makes possible the realization of a high dignity focusing.

It is preferable, in this case, to set a space d₁₆ between the third group III and the fourth group IV so as to be larger than the moving amount of the fourth group IV to prevent the same from coming into collision with the third group III in effecting the zooming and focusing processes, thus being capable of realizing a smaller closest range for photographing. The total length of the lens system will be slightly large, but the lenses forming the fourth group IV can be respectively made small in diameter and light in weight, so that the entire optical system including a driving unit can be advantageously attained compactization.

The zoom lens of figure 1 is preferable to be arranged such that looking from the object side, the first group I has a negative lens L₁₁, a positive lens L₁₂ and a positive meniscus lens L₁₃, the second group II has a negative meniscus lens L₂₁, a negative lens L₂₂ and a positive lens L₂₃, the third group III has two positive lenses L₃₁ and L₃₂ and a negative lens L₃₃ and the fourth group IV has a cemented lens made of a negative lens L₄₁ and a positive lens L₄₂ and a positive lens L₄₃. So arranged as above that the illustrated zoom lens can correct both the monochromatic and chromatic aberrations of respective groups by using only 12 lens elements and good aberration performances can be realized over the entire zoom range from wide end to telephoto end as well as over the entire photographing distance from the infinite to the dosest point. In addition, all groups are respectively configured of three lenses, so that well-balanced aberration correction can be realized. Referring to the third group III, looking from the object side, a first lens L₃₁ is a positive lens whose image side surface r₁₂ is convex, a second lens L₃₂ is a positive lens whose object side surface r₁₃ is convex and a third lens L₃₃ is a negative lens whose object side surface r₁₅ is concave. As a result despite that the aperture ratio is as large as about 1-4 in F-number, spherical aberration and on-axis chromatic aberration can be satisfactorily corrected. Also, by arranging both two positive lenses on the object side, the height of on-axis light ray can be prevented from increasing, thus making possible to decrease diameters of respective lenses forming the third group III.

Further referring to the third group III, it is preferable that the positive lens L₃₁ and/or the positive lens L₃₂ are made of a double-convex lens and that curvature radii of the object side and the image side thereof are equal in the absolute value to each other. This offers a great advantage in manufacturing the zoom lens in that there is no need to pay attention to the possibility that it might be oppositely inserted during assembling.

Furthermore, the fourth group IV is preferable to have a cemented lens whose cemented surface r₁₈ between the lenses L₄₁ and L₄₂ is convex to the object side direction and the positive lens L₄₃ whose object side surface r₂₀ is convex. So configured that coma aberration and lateral chromatic aberration can be satisfactorily corrected.

Further in addition, when configured so as to satisfy the following conditions, aberration performances are outstandingly effective and a compact zoom lens can be realized with a reduced number of lenses:${\text{4.0 < f}}_{\text{1}} {\text{/ f}}_{\text{w}} \text{< 7.0}$${\text{0.8 < |f}}_{\text{2}} \text{| / fw < 1.6}$${\text{2.0 < f}}_{\text{3}} \text{/ fw < 6.0}$${\text{2.0 < f}}_{\text{4}} \text{/ fw < 3.0}$${\text{0.3 < d}}_{\text{16}} {\text{/ f}}_{\text{4}} \text{< 1.0}$${\text{0.4 < |r}}_{\text{12}} {\text{| / f}}_{\text{3}} \text{< 4.0}$${\text{0.6 < r}}_{\text{13}} {\text{/ f}}_{\text{3}} \text{< 3.0}$${\text{0.3 < |r}}_{\text{15}} {\text{| / f}}_{\text{3}} \text{< 2.0}$${\text{0.3 < r}}_{\text{18}} {\text{/ f}}_{\text{4}} \text{< 1.0}$${\text{0.6 < r}}_{\text{20}} {\text{/ f}}_{\text{4}} \text{< 1.8}$ where, f_{w}: entire focal length of wide angle end, fᵢ (i=1, 2, 3, 4): focal length of i-th group lens system, d₁₆: 16th air space from the object side, rⱼ (j = 12, 13, 15, 18, 20): curvature radius of the lens surface of j-th lens.

These conditions cover refractive powers, surface shapes or the like of lenses of respective groups, indicating ranges where compactization can be attained and satisfactory aberration performances can be realized with a reduced number of lens components.

Next, description will be made in detail on each condition.

Condition (1) relates to the refractive power of the first group I. When the lower limit is exceeded, the refractive power of the group I becomes too large, so that correction of spherical aberration of the telephoto side becomes difficult.When the upper limit is exceeded, the lens length becomes large, resulting in being impossible to realize the compactization of the zoom lens.

Condition (2) relates to the refractive power of the second group II. When being out of the lower limit, the compactization can be realized, but Petzval sum of the entire system becomes largely negative, so that correction of curvature of field cannot be realized only by selection of glass material to be used. When the upper limit is exceeded, the aberration correction can become easy, but the amount of movement for zooming becomes large, thus being unable to realize the compactization of the entire lens system.

Condition (3) relates to the refractive power of the third group III. When the lower limit is exceeded, the refractive power of this group III becomes too large, so that correction of spherical aberration of the wide angle side becomes difficult. When the upper limit is exceeded, the composite system of the groups I, II and III becomes a divergent system, so that the fourth group IV positioned successively adjacent thereto cannot have lenses reduced in diameter. Also, when being out of the upper and lower limit range, the change in the angle of view due to the move of the fourth group IV in the focusing process becomes large, so that image fluctuation cannot be made small.

Condition (4) relates to the refractive power of the group IV. When being out of the lower limit, the quantity of light at a corner of the image becomes small, so that the diameter of the lens system of the first group I is required to be increased in order to obtain a desired quantity of light, thus being unable to realize the compactization. When the upper limit is exceeded, correction of aberration becomes easy, but the moving amount of the fourth group IV becomes large when short-distance photographing is carried out, resulting in the fact that not only the compactization of the entire system cannot be realized, but also the correction of unbalanced off-axis aberration between the short-distance and long-distance photographings becomes difficult.

Condition (5) relates to the air space between the groups III and IV. When the lower limit is exceeded, the height of off-axis light ray becomes small, so that correction of lateral chromatic aberration becomes difficult to effect only by the selection of glass material to be used. In addition, a restriction is placed on the moving amount of the fourth group IV when carrying out a short-distance photographing, thus being impossible to realize a suitable closest range for photographing. When the upper limit is exceeded, the entire system becomes difficult to be compactized. Further in addtion, in order that suitable quantity of light is to be ensured around the image plane, the lens system of the fourth group IV cannot be reduced in diameter.

Conditions (6), (7) and (8) relate to curvature radii of lenses forming the third group III. When lower limits of conditions (6) and (7) are exceeded, incident angles of off-axis light ray to the surfaces r₁₂ and r₁₃ become large, thus being difficult to correct the off-axis coma aberration. When upper limits of conditions (6) and (7) are exceeded, an under-corrected spherical aberration results. On the other hand, when the lower limit of condition (8) is exceeded, an over-corrected spherical aberration results. Also, when the upper limit of condition (8) is exceeded, coma aberration for the off-axis light ray on the side under than the principal ray becomes difficult to be corrected.

Conditions (9) and (10) relate to curvature radii of lenses forming the fourth group IV. When lower limits of conditions (9) and (10) are exceeded, incident angles of a light ray to these surfaces r₁₈ and r₂₀ become large, thus being difficult to correct coma aberration for the off-axis light ray on the side over than the principal ray. Also, when the lower limit of condition (9) is exceeded, spherical aberration of a short wavelength light ray, i.e., F-line or g-line, becomes difficult. When the upper limit of condition (9) is exceeded, on-axis and lateral chromatic aberrations cannot be corrected in the range where a glass material to be used is practically available. When the upper limit of condition (10) is exceeded, spherical aberration is difficult to be corrected.

Arrangements satisfying the conditions shown above will be shown below, in which, r₁, r₂, ... and r₂₃ respectively indicate curvature radii of surfaces of lenses in the successive order from the object side, d₁, d₂, ... and d₂₂ respectively indicate thicknesses of lenses or air spaces between adjacent lenses to each other, n1, n₂ lenses for d-line, and ν₁, ν₂ ... and ν₁₂ respectively indicate Abbe numbers of lenses for the d-line. The alphabetical letter f indicates a focal length of the entire lens system and F/No indicates F-number.

### (First Example)

| | | | |
|---|---|---|---|
| f = 8.880 - 53.933 | | | |
| F / No = 1.44 - 1.87 | | | |
| r₁ = 57.449 | d₁ = 1.2 | n₁ = 1.80518 | ν₁ = 25.5 |
| r₂ = 28.664 | d₂ = 5.8 | n₂ = 1.58913 | ν₂ = 61.2 |
| r₃ = -98.130 | d₃ = 0.2 | | |
| r₄ = 22.382 | d₄ = 2.9 | n₃ = 1.58913 | ν₃ = 61.2 |
| r₅ = 37.942 | d₅ (Variable) | | |
| r₆ = 38.469 | d₆ = 0.9 | n₄ = 1.58913 | ν₄ = 61.2 |
| r₇ = 8.973 | d₇ = 4.6 | | |
| r₈ = -12.718 | d₈ = 0.9 | n₅ = 1.67003 | ν₅ = 47.2 |
| r₉ = 11.520 | d₉ = 2.9 | n₆ = 1.80518 | ν₆ = 25.5 |
| r₁₀ = 412.193 | d₁₀ (Variable) | | |
| r₁₁ = 105.263 | d₁₁ = 2.7 | n₇ = 1.73520 | ν₇ = 41.0 |
| r₁₂ = -28.990 | d₁₂ = 0.2 | | |
| r₁₃ = 32.792 | d₁₃ = 2.5 | n₈ = 1.74400 | ν₈ = 44.9 |
| r₁₄ = -133.333 | d₁₄ = 0.7 | | |
| r₁₅ = -33.332 | d₁₅ = 0.9 | n₉ = 1.80518 | ν₉ = 25.5 |
| r₁₆ =133.333 | d₁₆ (Variable) | | |
| r₁₇ = -1604.000 | d₁₇ = 0.9 | n₁₀ = 1.80518 | ν₁₀ = 25.5 |
| r₁₈ = 15.139 | d₁₈ = 4.3 | n₁₁ = 1.69350 | ν₁₁ = 53.4 |
| r₁₉ = -30.833 | d₁₉ = 0.2 | | |
| r₂₀ = 21.392 | d₂₀ = 2.5 | n₁₂ = 1.70154 | ν₁₂ = 41.1 |
| r₂₁ = 641.519 | d₂₁ = (Variable) | | |
| r₂₂ = ∞ | d₂₂ = 8.0 | | |
| r₂₃ = ∞ | | | |

Next, variable air spaces by zooming of this example will be exemplified as follows.

When an object point distanced 2 m from the first surface r₁ of the lens L₁₁ in Fig. 1, the following data were obtained:

| | f | d₅ | d₁₀ | d₁₆ | d₂₁ |
|---|---|---|---|---|---|
| Wide angle | 8.884 | 0.800 | 23.970 | 16.140 | 2.041 |
| Standard | 29.635 | 16.250 | 8.520 | 12.818 | 5.362 |
| Telephoto | 53.933 | 21.216 | 3.554 | 14.772 | 3.409 |

Where, the standard position is a zoom position where the fourth group IV is most approached to the third group III.

| | |
|---|---|
| f₁ / f_{w} = 4.73 | \|f₂\| / f_{w} = 1.11 |
| f₃ / f_{w} = 3.36 | f₄ / f_{w} = 2.38 |
| d₁₆ / f₄ = 0.56 - 0.77 | \|r₁₂\| / f₃ = 0.97 |
| r₁₃ / f₃ = 1.10 | \|r₁₅\| / f₄ = 1.12 |
| r₁₈ / f₄ = 0.72 | r₂₀ / f₄ = 1.01 |

### (Second Example)

| | | | |
|---|---|---|---|
| f = 9.200 - 52.413 | | | |
| F / No = 1.45 - 1.86 | | | |
| r₁ = 58.323 | d₁ = 1.2 | n₁ = 1.80518 | ν₁ = 25.5 |
| r₂ = 29.049 | d₂ = 5.8 | n₂ = 1.58913 | ν₂ = 61.2 |
| r₃ = -98.742 | d₃ = 0.2 | | |
| r₄ = 22.618 | d₄ = 2.9 | n₃ = 1.58913 | ν₃ = 61.2 |
| r₅ = 38.228 | d₅ (Variable) | | |
| r₆ = 38.228 | d₆ = 0.9 | n₄ = 1.58913 | ν₄ = 61.2 |
| r₇ = 9.204 | d₇ = 4.6 | | |
| r₈ = -13.029 | d₈ = 0.9 | n₅ = 1.67003 | ν₅ = 47.2 |
| r₉ = 11.866 | d₉ = 3.0 | n₆ = 1.80518 | ν₆ = 25.5 |
| r₁₀ = 460.189 | d₁₀ (Variable) | | |
| r₁₁ = 72.970 | d₁₁ = 2.0 | n₇ = 1.74400 | ν₇ = 44.9 |
| r₁₂ = -72.970 | d₁₂ = 0.2 | | |
| r₁₃ = 40.893 | d₁₃ = 2.8 | n₈ = 1.74400 | ν₈ = 44.9 |
| r₁₄ = -40.893 | d₁₄ = 0.4 | | |
| r₁₅ = -26.988 | d₁₅ = 0.9 | n₉ = 1.80518 | ν₉ = 25.5 |
| r₁₆ = -99.444 | d₁₆ (Variable) | | |
| r₁₇ = 65.877 | d₁₇ = 0.9 | n₁₀ = 1.80518 | ν₁₀ = 25.5 |
| r₁₈ = 12.754 | d₁₈ = 4.1 | n₁₁ = 1.67790 | ν₁₁ = 55.5 |
| r₁₉ = -41.776 | d₁₉ = 0.2 | | |
| r₂₀ = 23.911 | d₂₀ =1.9 | n₁₂ = 1.70154 | ν₁₂ = 41.1 |
| r₂₁ = 145.361 | d₂₁ = (Variable) | | |
| r₂₂ = ∞ | d₂₂ = 8.0 | | |
| r₂₃ = ∞ | | | |

Next, variable air spaces by zooming of this example will be exemplified as follows.

When an object point distanced 2 m from the first surface r₁ of the lens L₁₁ shown in Fig. 1, the following data were obtained:

| | f | d₅ | d₁₀ | d₁₆ | d₂₁ |
|---|---|---|---|---|---|
| Wide angle | 9.200 | 1.000 | 23.670 | 13.477 | 2.043 |
| Standard | 59.938 | 16.122 | 8.548 | 10.204 | 5.317 |
| Telephoto | 52.413 | 21.184 | 3.486 | 12.160 | 3.360 |

Where, the standard position is a zoom position where the fourth group IV is most approached to the third group III.

| | |
|---|---|
| f₁ / f_{w} = 4.62 | \|f₂\| / f_{w} = 1.11 |
| f₃ / f_{w} = 3.08 | f₄ / f_{w} = 2.54 |
| d₁₆ / f₄ = 0.39 - 0.58 | \|r₁₂\| / f₃ = 2.58 |
| r₁₃ / f₃ = 1.44 | \|r₁₅\| / f₄ = 0.95 |
| r₁₈ / f₄ = 0.54 | r₂₀ / f₄ = 1.02 |

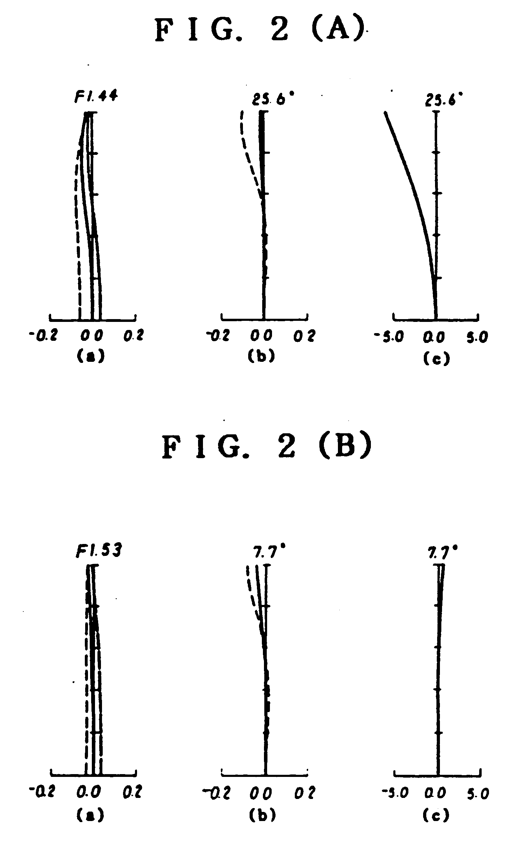

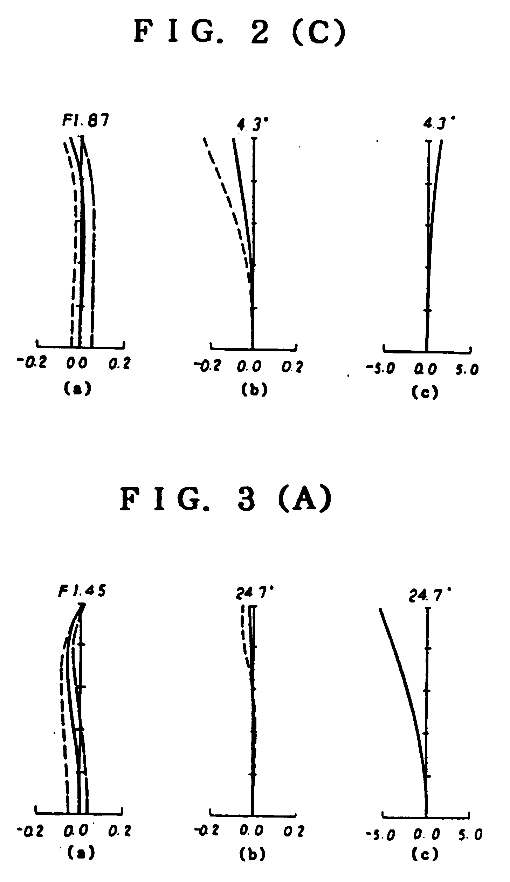

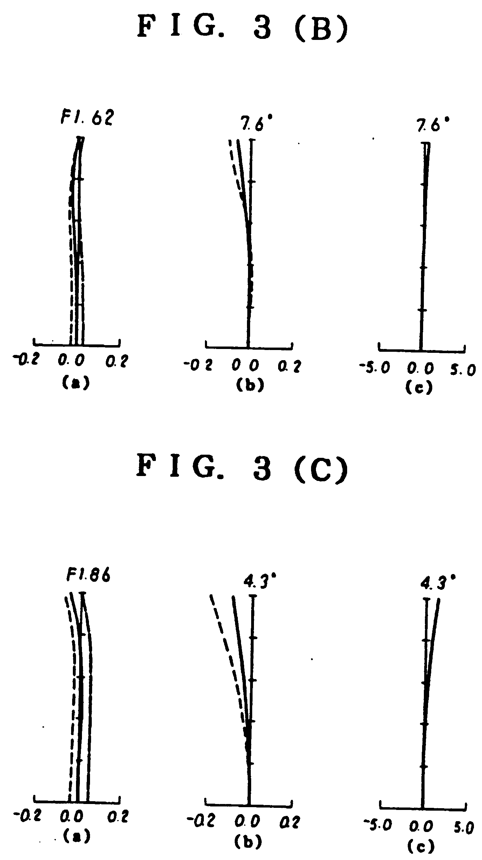

Figs. 2 and 3 show aberration characteristics obtained in the first and second examples, respectively. In these figures, (A) denotes aberration characteristics in the wide angle end, (B) denotes aberration characteristics in an intermediate zoom position and (C) denotes aberration characteristics in the telephoto end. Also, in each of figures denoted at (A), (B) and (C), (a) indicates spherical aberration (mm), (b) indicates astigmatism (mm) and (c) indicates curvature of field (%). In the spherical aberration diagrams, continuous lines, dotted lines and short dashes lines show spherical aberration characteristics of d-line, F-line and Cline, respectively. In the astigmatism diagrams, dotted lines and continuous lines show meridional image surfaces and sagittal image surfaces, respectively.

From these diagrams, it is clear that the lens systems according to the first and second examples shown above respectively exhibit good optical performances.

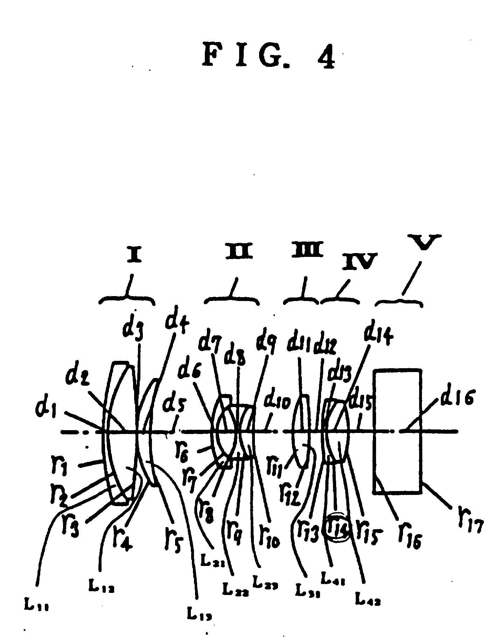

A zoom lens arrangement according to the present invention is schematically cross-sectionally shown in Fig. 4. In Fig. 4, the zoom lens comprises, in the successive order from the object side, a first group I consisting of a negative lens L₁₁, a positive lens L₁₂ and a positive meniscus lens L₁₃, a second group II consisting of a negative meniscus lens L₂₁, a negative lens L₂₂ and a positive lens L₂₃, a third group III consisting of a positive lens L₃₁ at least one of whose surfaces is aspherical and a fourth group IV consisting of a cemented lens made of lenses L₄₁ and L₄₂ at least one of whose surfaces are aspherically shaped. So arranged that the zoom lens system of this embodiment makes possible that both the monochromatic and chromatic aberrations can be corrected by using only 9 lenses smaller in the number than in the above-mentioned examples and yet outstandingly preferable aberration characteristics can be realized over the entire zoom range from the wide angle end to the telephoto end as well as over the entire photographing distance from the infinite point to the closest point. In addition, the groups I and II are respectively made of three lenses, the group III intermediately placed as seen in Fig. 4 is made of a single aspherical lens and the group IV which is arranged at the closest position to the image side is made of two lenses having aspherical surfaces, thus making well-balanced correction of aberration possible.

Such a condition that the third group III is made of an aspherical lens having a positive refractive power and being convex to the object side is an indispensable factor in order to make the third group of a single lens as well as to correct various aberrations, particularly spherical aberration, under such a condition that the aperture ratio is as large as abut 1.4 in F-number.

In the fourth group IV, to make aspherical at least one of surfaces of the lenses L₄₁ and L₄₂ forming the cemented lens and yet to make the cemented surface r₁₄ convex to the object side are preferable. So configured that coma aberration and magnification chromatic aberration can be satisfactorily corrected by using only 2 lenses.

In addition, when configured so as to satisfy the following conditions, aberration performances are extremely superior and a compact zoom lens can be realized with a small number of lens components:${\text{3.0 < f}}_{\text{1}} {\text{/ f}}_{\text{w}} \text{< 7.0}$${\text{0.5 < |f}}_{\text{2}} {\text{| / f}}_{\text{w}} \text{< 1.6}$${\text{2.0 < f}}_{\text{3}} {\text{/ f}}_{\text{w}} \text{< 7.0}$${\text{2.0 < f}}_{\text{4}} {\text{/ f}}_{\text{w}} \text{< 4.0}$${\text{0.05 < d}}_{\text{12}} {\text{/ f}}_{\text{4}} \text{< 1.0}$${\text{0.4 < r}}_{\text{11}} {\text{/ f}}_{\text{3}} \text{< 1.5}$${\text{0.2 < r}}_{\text{14}} {\text{/ f}}_{\text{4}} \text{< 1.5}$

Where, f_{w}: entire focal length in the wide angle end, f₁ (i = 1, 2, 3, 4): focal length of the i-th group, d₁₂: twelveth air space from the object side, rⱼ (j = 11, 14): curvature radius of the j-th lens surface.

These conditions cover refractive powers, surface shapes or the like of lenses of respective groups, indicating ranges where compactization can be attained and satisfactory aberration performances can be realized with a reduced number of lens components.

Next, description will be made in detail on these conditions.

Conditions (11), (12), (13), (14) and (15) cover the same contents as those covered by conditions (1), (2), (3), (4) and (5), respectively.

Condition (16) relates to the curvature radius of the surface r₁₁ on the object side of the aspherical lens L₃₁ of the third group III. Of the lens L₃₁, by making the surface r₁₁ on the object side andlor the surface r₁₂ on the image side aspherical and by optimizing the shape thereof, various aberrations can be satisfactorily corrected despite of using a single lens. However, when the lower limit of condition (16) is exceeded, correction of spherical aberration becomes difficult, and when the upper limit thereof is exceeded, correction of coma aberration for the off-axis light ray on the side under than the principal ray becomes difficult.

Condition (17) relates to the curvature radius of the cemented surface r₁₄ of the cemented lens of the fourth group IV. Of the negative refractive power lens L₄₁ and the positive refractive power lens L₄₂ forming the fourth group IV, by making aspherical at least one of the surface r₁₃ on the object side of the lens L₄₁, the cemented surface r₁₄ and the surface r₁₅ on the image side of the lens L₄₂ and by optimizing the shape thereof, monochromatic aberration can be satisfactorily corrected while correcting on-axis and lateral chromatic aberrations. However, when the lower limit of condition (17) is exceeded, incident angles of a light ray to these surfaces become large, so that correction of coma aberration for the off-axis light ray on the side over than the principal ray becomes difficult as well as an over-corrected spherical aberration results for the F-line. When the upper limit is exceeded, on-axis and lateral chromatic aberrations cannot be corrected in the range where a glass material to be used is practically available.

Embodiments satisfiable these conditions shown above will be shown below. Symbols used in these embodiments are identical to those used in examples 1 and 2.

In addition, the aspherical surface shape is defined by the following expression:${\text{Z = C.Y}}^{\text{2}} \text{/[1 +} \sqrt{{\text{1 - (1 + K)·C}}^{\text{2}} {\text{·Y}}^{\text{2}} \text{]}} \text{+} {\text{D·Y}}^{\text{4}} {\text{+ E·Y}}^{\text{6}} {\text{+ F·Y}}^{\text{8}} {\text{+ G·Y}}^{\text{10}}$ where,
- Z:: distance of a point on the aspherical surface from the contact plane at the vertex of aspherical surface when the height from the optical axis is expressed by Y
- Y:: height from the optical axis
- C:: Curvature radius of the vertex of aspherical surface (= 1 / r)
- K:: Conical constant
- D, E, F, G:: Aspherical coefficient

### ( First Embodiment )

| | | | |
|---|---|---|---|
| f = 5.964 - 35.709 | | | |
| F / No = 1.45 - 1.94 | | | |
| r₁ = 40.151 | d₁ = 0.9 | n₁ = 1.80518 | ν₁ = 25.5 |
| r₂ = 19.849 | d₂ = 4.8 | n₂ = 1.58913 | ν₂ = 61.2 |
| r₃ = -76.574 | d₃ = 0.2 | | |
| r₄ = 14.954 | d₄ = 2.2 | n₃ = 1.58913 | ν₃ = 61.2 |
| r₅ = 27.879 | d₅ (Variable) | | |
| r₆ = 17.496 | d₆ = 0.7 | n₄ = 1.58913 | ν₄ = 61.2 |
| r₇ = 5.468 | d₇ = 3.2 | | |
| r₈ = -8.045 | d₈ = 0.7 | n₅ = 1.66672 | ν₅ = 48.4 |
| r₉ = 6.929 | d₉ = 2.4 | n₆ = 1.80518 | ν₆ = 25.5 |
| r₁₀ = 97.444 | d₁₀ (Variable) | | |
| r₁₁ = 12.857 | d₁₁ = 2.9 | n₇ = 1.59561 | ν₇ = 56.6 |
| r₁₂ = -38.011 | d₁₂ (Variable) | | |
| r₁₃ = 23.160 | d₁₃ = 0.7 | n₈ = 1.84666 | ν₈ = 23.9 |
| r₁₄ = 7.750 | d₁₄ = 3.7 | n₉ = 1.67790 | ν₉ = 55.5 |
| r₁₅ = -17.412 | d₁₅ (Variable) | | |
| r₁₆ = ∞ | d₁₆ = 8.0 | | |
| r₁₇ = ∞ | | | |

In addition, twelveth and fifteenth surfaces are aspherical whose aspherical coefficients are shown as follows:

| | 12th surface | 15th surface |
|---|---|---|
| K | -2.809E1 | 3.950E-1 |
| D | 1.195E-4 | 6.307E-5 |
| E | 3.230E-7 | 1.494E-6 |
| F | 1.137E-8 | -8.021E-8 |
| G | -3.443E-10 | 1.744E-9 |

Next, variable air spaces by zooming of this embodiment will be exemplified as follows:

When an object point distanced 2 m from the first surface r₁ of the lens L₁₁ shown in Fig. 4, the following data were obtained:

| | f | d₅ | d₁₀ | d₁₂ | d₁₅ |
|---|---|---|---|---|---|
| Wide angle | 5.965 | 1.000 | 15.894 | 4.401 | 2.021 |
| Standard | 20.320 | 10.550 | 6.344 | 2.049 | 4.373 |
| Telephoto | 35.705 | 13.871 | 3.023 | 3.703 | 2.719 |

Where, the standard position is a zoom position where the fourth group IV is most approached to the third group III.

| | |
|---|---|
| f₁ / f_{w} = 4.68 | \|f₂\| / f_{w} = 1.05 |
| f₃ / f_{w} = 2.76 | f₄ / f_{w} = 3.21 |
| d₁₂ / f₄ = 0.08 - 0.23 | r₁₁ / f₃ = 0.78 |
| r₁₄ / f₄ = 0.40 | |

### (Second Embodiment)

| | | | |
|---|---|---|---|
| f = 5.968 - 36.103 | | | |
| F / No = 1.45 - 1.95 | | | |
| r₁ = 42.958 | d₁ = 0.9 | n₁ = 1.80518 | ν₁ = 25.5 |
| r₂ = 20.407 | d₂ = 4.8 | n₂ = 1.58913 | ν₂ = 61.2 |
| r₃ = -62.676 | d₃ = 0.2 | | |
| r₄ = 15.802 | d₄ = 2.2 | n₃ = 1.58913 | ν₃ = 61.2 |
| r₅ = 30.976 | d₅ (Variable) | | |
| r₆ = 28.571 | d₆ = 0.7 | n₄ = 1.58913 | ν₄ = 61.2 |
| r₇ = 6.012 | d₇ = 2.9 | | |
| r₈ = -8.314 | d₈ = 0.7 | n₅ = 1.66672 | ν₅ = 48.4 |
| r₉ = 7.421 | d₉ = 2.4 | n₆ = 1.80518 | ν₆ = 25.5 |
| r₁₀ = 118.398 | d₁₀ (Variable) | | |
| r₁₁ = 15.271 | d₁₁ = 2.6 | n₇ = 1.60311 | ν₇ = 60.7 |
| r₁₂ = -53.777 | d₁₂ (Variable) | | |
| r₁₃ = 14.368 | d₁₃ = 0.7 | n₈ = 1.80518 | ν₈ = 25.5 |
| r₁₄ = 6.282 | d₁₄ = 4.9 | n₉ = 1.67790 | ν₉ = 55.5 |
| r₁₅ = -23.114 | d₁₄ (Variable) | | |
| r₁₆ = ∞ | d₁₆ = 8.0 | | |
| r₁₇ = ∞ | | | |

In addition, twelveth and fifteenth surfaces are aspherical whose aspherical coefficients are shown as follows:

| | 12th surface | 15th surface |
|---|---|---|
| K | -2.073E1 | 2.509 |
| D | 7.483E-5 | 1.085E-4 |
| E | -1.188E-7 | 5.003E-7 |
| F | 2.112E-8 | -7.835E-8 |
| G | -3.638E-10 | 1.158E-9 |

Next, variable air spaces by zooming of this embodiment will be exemplified as follows:

When an object point distanced 2 m from the first surface r₁ of the lens L₁₁ shown in Fig. 4, the following data were obtained:

| | f | d₅ | d₁₀ | d₁₂ | d₁₅ |
|---|---|---|---|---|---|
| Wide angle | 5.968 | 1.000 | 15.894 | 8.161 | 2.019 |
| Standard | 20.101 | 10.580 | 6.314 | 5.942 | 4.238 |
| Telephoto | 36.103 | 13.914 | 2.980 | 7.521 | 2.658 |

Where, the standard position is a zoom position where the fourth group IV is most approached to the third group III.

| | |
|---|---|
| f₁ / f_{w} = 4.61 | \|f₂\| / f_{w} = 1.05 |
| f₃ / f_{w} = 3.35 | f₄ / f_{w} = 2.71 |
| d₁₂ / f₄ = 0.34 - 0.51 | r₁₁ / f₃ = 0.76 |
| r₁₄ / f₄ = 0.39 | |

### (Third Embodiment)

| | | | |
|---|---|---|---|
| f = 5.961- 35.802 | | | |
| F / No = 1.44 - 1.94 | | | |
| r₁₁ = 18.528 | d₁₁ = 2.6 | n₇ = 1.59561 | ν₇ = 56.6 |
| r₁₂ = -25.947 | d₁₂ (Variable) | | |
| r₁₃ = 16.225 | d₁₃ = 0.7 | n₈ = 1.84666 | ν₈ = 23.9 |
| r₁₄ = 6.821 | d₁₄ = 4.2 | n₉ = 1.67790 | ν₂ = 55.5 |
| r₁₅ = -20.544 | d₁₄ (Variable) | | |
| r₁₆ = ∞ | d₁₆ = 8.0 | | |
| r₁₇ = ∞ | | | |

The lenses of the first group I and second group II used in this Embodiment are identical to those used in Example 1.

In addition, eleventh and fifteenth surfaces are aspherical whose aspherical coefficients are shown as follows:

| | 11th surface | 15th surface |
|---|---|---|
| K | -1.293 | 2.278 |
| D | -7.135E-5 | 8.665E-5 |
| E | -9.310E-8 | -7.322E-7 |
| F | -1.395E-8 | -1.070E-8 |
| G | 2.803E-10 | -9.903E-11 |

Next, variable air spaces by zooming of this embodiment will be exemplified as follows:

When an object point distanced 2 m from the first surface r₁ of the lens L₁₁ in Fig. 4, the following data were obtained:

| | f | d₅ | d₁₀ | d₁₂ | d₁₅ |
|---|---|---|---|---|---|
| Wide angle | 5.961 | 1.000 | 15.894 | 6.526 | 2.019 |
| Standard | 20.152 | 10.550 | 6.344 | 4.324 | 4.222 |
| Telephoto | 35.796 | 13.871 | 3.023 | 5.874 | 2.671 |

Where, the standard position is a zoom position where the fourth group IV is most approached to the third group III.

| | |
|---|---|
| f₃ / f_{w} = 3.11 | f₄ / f_{w} = 2.89 |
| d₁₂ / f₄ = 0.22 - 0.38 | r₁₁ / f₃ = 1.00 |
| r₁₄ / f₄ = 0.40 | |

### (Fourth Embodiment)

| | | | |
|---|---|---|---|
| f = 5.962 - 35.694 | | | |
| F / No = 1.43 - 1.94 | | | |
| r₁₁ = 13.238 | d₁₁ = 2.9 | n₇ = 1.59561 | ν₇ = 56.6 |
| r₁₂ = -35.018 | d₁₂ (Variable) | | |
| r₁₃ = 22.075 | d₁₃ = 0.7 | n₈ = 1.84666 | ν₈ = 23.9 |
| r₁₄ = 7.500 | d₁₄ = 3.7 | n₉ = 1.67790 | νυ₉ = 55.5 |
| r₁₅ = -17.473 | d₁₅ (Variable) | | |
| r₁₆ = ∞ | d₁₆ = 8.0 | | |
| r₁₇ = ∞ | | | |

The lenses of the first group I and second group II used in this Embodiment are identical to those used in Example 1.

In addition, eleventh and thirteenth surfaces are aspherical whose aspherical coefficients are shown as follows:

| | 11th surface | 13th surface |
|---|---|---|
| K | -9.974 | -2.498 |
| D | 1.217E-4 | -2.014E-5 |
| E | 1.640E-7 | -4.821E-7 |
| F | 2.638E-8 | 3.190E-8 |
| G | -6.005E-10 | -6.865E-10 |

Next, variable air spaces by zooming of this embodiment will be exemplified as follows:

When an object point distanced 2 m from the first surface r₁ of the lens L₁₁ in Fig. 4, the following data were obtained:

| | f | d₅ | d₁₀ | d₁₂ | d₁₅ |
|---|---|---|---|---|---|
| Wide angle | 5.962 | 1.000 | 15.894 | 5.046 | 2.021 |
| Standard | 20.202 | 10.550 | 6.344 | 2.710 | 4.357 |
| Telephoto | 35.690 | 13.871 | 3.023 | 4.349 | 2.717 |

Where, the standard position is a zoom position where the fourth group IV is most approached to the third group III.

| | |
|---|---|
| f₃ / f_{w} = 2.77 | f₄ / f_{w} = 3.16 |
| d₁₂ / f₄ = 0.12 - 0.27 | r₁₁ / f₃ = 0.80 |
| r₁₄ / f₄ = 0.40 | |

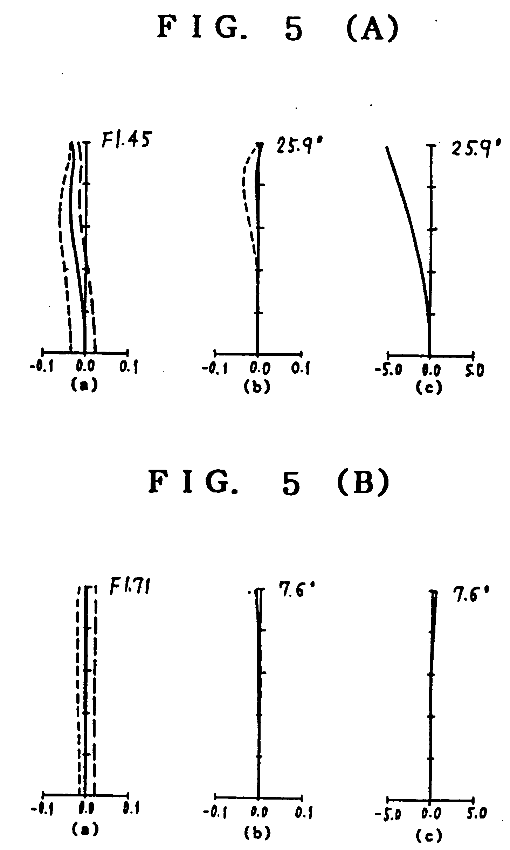

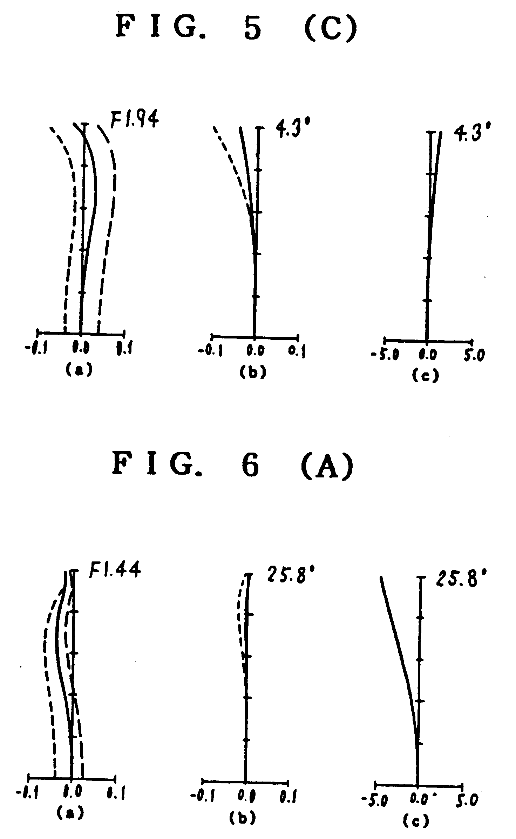

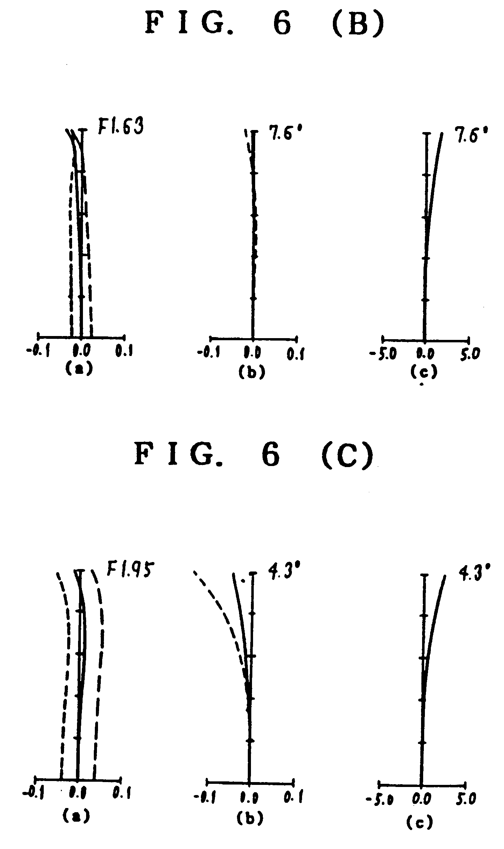

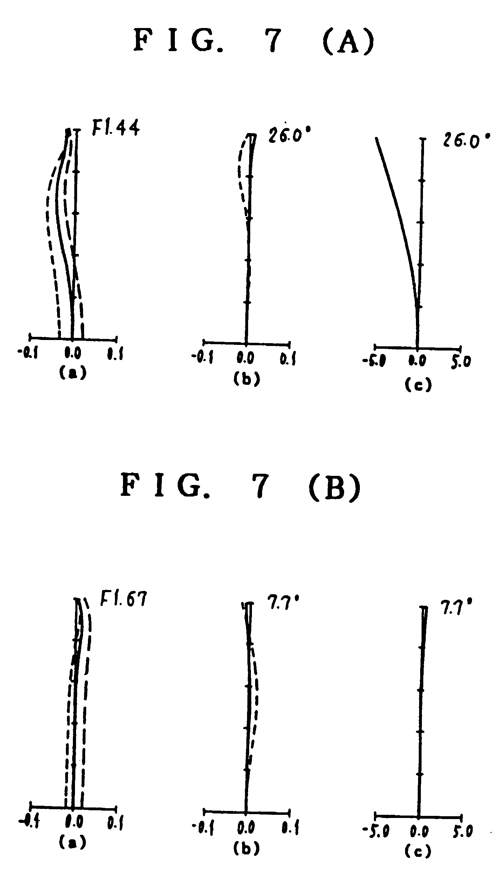

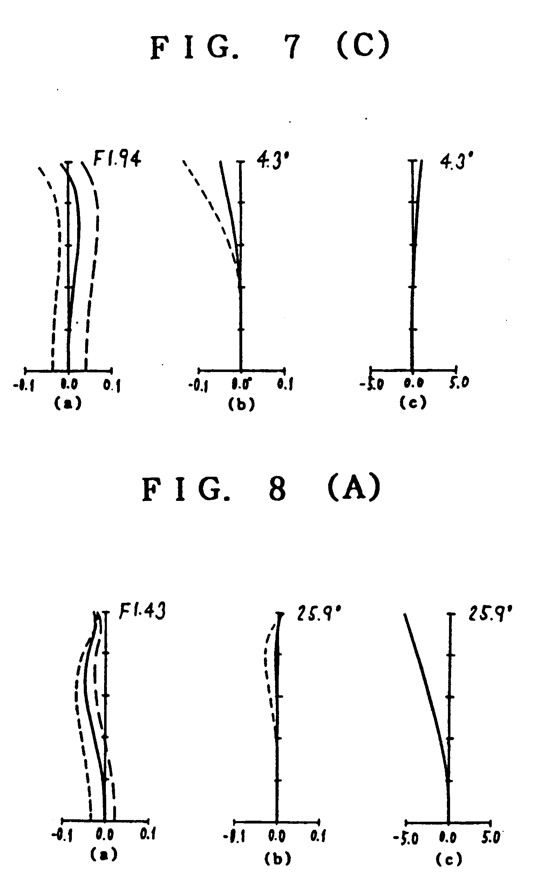

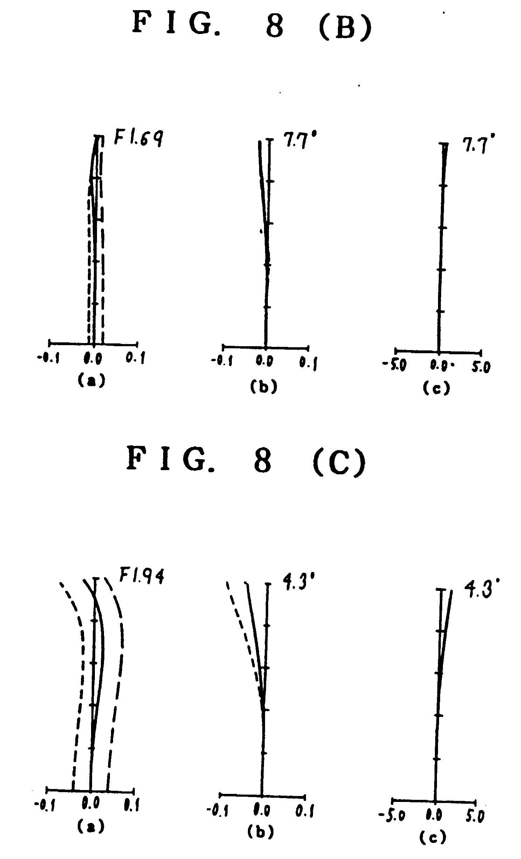

Figs. 5, 6, 7 and 8 show aberration characteristics obtained in the first second, third and fourth embodiments, respectively. In each of Figs. 5 through 8, (A) denotes aberration characteristics in the wide angle end, (B) denotes aberration characteristics in an intermediate zoom position and (C) denotes aberration characteristics in the telephoto end. Also, in each offigures denoted at (A), (B) and (C), (a) denotes spherical aberration (mm), (b) astigmatism (mm) and (c) curvature of field (%). In the spherical aberration diagrams, continuous lines, dotted lines and short dashes lines show spherical aberration characteristics of d-line, F-line and C-line, respectively. In the astigmatism diagrams, dotted lines and continuous lines show meridional image surfaces and sagittal image surfaces, respectively.

From the diagrams, it is clear that these lens systems according to these embodiments respectively exhibit good optical performances.

## Claims

1. A zoom lens for use in a video camera or an electronic still camera having in successive order from the object side, a first lens group (I) of positive refractive power consisting of a negative lens (L11), a positive lens (L12) and a positive meniscus lens (L13); a second lens group (II) of negative refractive power for affecting a variation of image magnification by moving along its optical axis. and consisting of a negative meniscus lens (L21), a negative lens (L22) and a positive lens (L23); a third lens group (III) of positive refractive power and consisting of a positive lens (L31) having at least one aspherical surface (r11, r12); and a fourth lens group (IV) of positive refractive power having at least one aspherical surface moving along its optical axis so as to focus and to correct for defocusing when a variation in image magnification is affected by a movement of said second group,
the maximum air space existing between said third group (III) and said fourth group (IV) being larger than the moving amount of said fourth group,
and said zoom lens satisfying substantially the condition 3.0 < fᵢ / f_{w} < 7.0,
characterised in that said fourth group (IV) exclusively consists of a cemented lens (L41,L42) which exclusively consists of two lenses (L41,L42),
and said zoom lens satisfies substantially the following further conditions:${\text{0.5 < |f}}_{\text{2}} {\text{| / f}}_{\text{w}} \text{< 1.6}$${\text{2.0 < f}}_{\text{3}} {\text{/ f}}_{\text{w}} \text{< 7.0}$${\text{2.0 < f}}_{\text{4}} {\text{/ f}}_{\text{w}} \text{< 4.0}$${\text{0.05 < d}}_{\text{12}} {\text{/ f}}_{\text{4}} \text{< 1.0}$${\text{0.4 < r}}_{\text{11}} {\text{/ f}}_{\text{3}} \text{< 1.5}$${\text{0.2 < r}}_{\text{14}} {\text{/ f}}_{\text{4}} \text{< 1.5}$ where, f_{w}: entire focal length in the wide angle end, fᵢ (i= 1, 2, 3, 4): focal length of i-th group, d₁₂: 12th air space from the object side, rᵢ (j = 11, 14): curvature radius of the j-th lens surface.

2. A zoom lens according to claim 1, wherein said positive aspherical lens (L31) of said third group is convex to the object side.

3. A zoom lens according to claim 1 or 2, wherein said cemented lens of said fourt group (IV) has a cemented surface convex to the object side.

## Patentansprüche

1. Zoom-Objektiv zur Verwendung in einer Videokamera oder einer elektronischen Stehbildkamera, welches aufeinanderfolgend von der Objektseite aus eine erste Gruppe (I) mit positiver Brechkraft aufweist, die aus einer Negativlinse (L11), einer Positivlinse (L12), und einer positiven Meniskuslinse (L13); besteht; eine zweite Gruppe (II) mit negativer Brechkraft zur Beeinflussung einer Änderung der Bildvergrößerung durch Bewegung entlang ihrer optischen Achse, bestehend aus einer negativen Meniskuslinse (L21), einer Negativlinse (L22) und einer Positivlinse (L23); eine dritte Gruppe (III) mit positiver Brechkraft bestehend aus einer positiven Linse (L31) mit wenigstens einer asphärischen Fläche (r11, r12); und eine vierte Gruppe (IV) mit positiver Brechkraft, die wenigstens eine asphärische Fläche aufweist und sich entlang ihrer optischen Achse bewegt, um eine Fokussierung und eine Korrektur der Defokussierung durchzuführen, wenn eine Änderung der Bildvergrößerung durch eine Bewegung der zweiten Gruppe bebeeinflußt wird, wobei der maximale Luftzwischenraum, zwischen der dritten Gruppe (III) und der vierten Gruppe vorhanden ist, (IV) größer als die Bewegungsgröße der vierten Gruppe ist, und das genannte Zoom-Objektiv im wesentlichen die Bedingung 3,0 < f₁/f_{w} < 7.0 erfüllt, **dadurch gekennzeichnet,** daß die vierte Gruppe (IV) ausschließlich aus einem Kittglied (L41, L42) besteht, das ausschließlich aus zwei Linsen (L41, L42) besteht, und das genannte Zoom-Objektiv im wesentlichen die folgenden weiteren Bedingungen erfüllt:${\text{0,5 < |f}}_{\text{2}} {\text{|/f}}_{\text{w}} \text{< 1,6}$${\text{2,0 < f}}_{\text{3}} \text{/fw < 7,0}$${\text{2,0 < f}}_{\text{4}} {\text{/f}}_{\text{w}} \text{< 4,0}$${\text{0,05 < d}}_{\text{12}} {\text{/f}}_{\text{4}} \text{< 1,0}$${\text{0,4 < r}}_{\text{11}} {\text{/ f}}_{\text{3}} \text{< 1,5}$${\text{0,2 < r}}_{\text{14}} {\text{/f}}_{\text{4}} \text{< 1,5}$ wobei f_{w} die gesamte Brennweite am Weitwinkelende bezeichnet, fᵢ (i = 1, 2, 3, 4) die Brennweite der i-ten Gruppe, d₁₂ den 12. Luftspalt von der Objektseite aus, und rⱼ (j = 11, 14) den Krümmungsradius der Linsenfläche der j-ten Linse.

2. Zoom-Objektiv nach Anspruch 1, bei welchem die positive, asphärische Linse (L31) der dritten Gruppe zur Objektseite hin konvex ist.

3. Zoom-Objektiv nach Anspruch 1 oder 2, bei welchem die verkittete Linse der vierte Gruppe (IV) eine verkittete Oberfläche aufweist, die konvex zur Objektseite hin ist.

## Revendications

1. Objectif à focale variable à utiliser dans une caméra vidéo ou une caméra électronique à image fixe (appareil photo électronique) ayant, dans l'ordre successif à partir du côté objet, un premier groupe de lentilles (I) de puissance de réfraction positive se composant d'une lentille négative (L₁₁), d'une lentille positive (L₁₂) et d'une lentille ménisque positive (L₁₃), un second groupe de lentilles (II) de puissance de réfraction négative destiné à agir sur une variation de grossissement d'image par déplacement le long de son axe optique, et se composant d'une lentille ménisque négative (L21), d'une lentille négative (L22) et d'une lentille positive (L23); un troisième groupe de lentilles (III) de puissance de réfraction positive et se composant d'une lentille positive (L31) ayant au moins une surface asphérique (r₁₁, r₁₂), et un quatrième groupe de lentilles (IV) de puissance de réfraction positive qui possède au moins une surface asphérique, se déplaçant le long de son axe optique afin de faire la mise au point et de corriger le défaut de mise au point lorsqu'une variation du grossissement d'image subit l'effet d'un déplacement dudit second groupe, l'espace d'air maximal qui existe entre ledit troisième groupe (III) et ledit quatrième groupe (IV) étant plus grand que la distance de déplacement dudit quatrième groupe, et ledit objectif optique à focale variable satisfaisant sensiblement la condition suivante : 3.0 < f₁ / f_{w} < 7,0,
caractérisé en ce que ledit quatrième groupe (IV) se compose exclusivement d'une lentille collée (L41, L42) qui se compose exclusivement de deux lentilles, et ledit objectif à focale variable satisfaisant sensiblement les conditions suivantes :${\text{0,5 < |f}}_{\text{2}} {\text{| / f}}_{\text{w}} \text{< 1,6}$${\text{2,0 < f}}_{\text{3}} {\text{/ f}}_{\text{w}} \text{< 7,0}$${\text{2,0 < f}}_{\text{4}} {\text{/ f}}_{\text{w}} \text{< 4,0}$${\text{0,05 < d}}_{\text{12}} {\text{/ f}}_{\text{4}} \text{< 1,0}$${\text{0,4 < r}}_{\text{11}} {\text{/ f}}_{\text{3}} \text{< 1,5}$${\text{0,2 < r}}_{\text{14}} {\text{/ f}}_{\text{4}} \text{< 1,5}$ où f_{w} est la distance focale totale à l'extrémité grand angle, fᵢ (i= 1, 2, 3, 4) est la distance focale du i^{ième} groupe, d₁₂ est le 12^{ième} espace d'air à partir du côté de l'objet, rⱼ (j = 11, 14) est le rayon de courbure de la j^{ième} surface de lentille.

2. Objectif à focale variable selon la revendication 1, dans lequel ladite lentille asphérique positive (L31) dudit troisième groupe est convexe du côté de l'objet.

3. Objectif à focale variable selon la revendication 1 ou 2, dans lequel ladite lentille collée dudit quatrième groupe (IV) a une surface collée convexe du côté de l'objet.
